# EUROPEAN PATENT APPLICATION

(11) **EP 4 733 643 A1**
(43) Date of publication of application: **29.04.2026**
(21) Application number: 24831573.1
(22) Date of filing: 03.06.2024
(51) Int. Cl.: F16K 11/087

(54) **ELECTRIC VALVE**

(30) Priority: 26.06.2023 JP 2023104077
(71) Applicant: Nippon Thermostat Co., Ltd., Kiyose-shi Tokyo 204-0003 (JP)
(72) Inventor: KUMASHIRO Tsuyoshi, Kiyose-shi, Tokyo 204-0003 (JP)
(74) Representative: Hoffmann Eitle
(86) International application number: PCT/JP2024/020223
(87) International publication number: WO 2025/004703

(57) **Abstract**

Provided is an electric valve comprising a rotary-type valve body, with which foreign matter in a cooling solution can be prevented from obstructing rotation of the valve body even when foreign matter infiltrating between an outer wall of the valve body and a housing inner wall, and any increase in size can be minimized. The present invention comprises a housing 11 having an opening at one end and a communication port on the outer periphery, a valve body 12 that is rotatably inserted into the housing and that opens/closes the communication port, a seal member 14 attached to the communication port and brought into sliding contact with the outer periphery of the valve body, and a drive device that rotationally drives the valve body. The valve body has a cylindrical valve part. Formed in the valve part are an outer wall capable of closing off the communication port, a valve hole of communicating with the communication port, a valve opening that is formed at one end of the valve part and that communicates with the opening, and a foreign matter recovery part 12h. The foreign matter recovery part is a groove or a hole formed in a non-seal area which is at the outer periphery of the valve part and on which the seal member does not slide.

## Description

### Technical Field

The present invention relates to an electric valve.

### Background Art

For example, in a rotary flow rate control valve used for a cooling device for an automobile, there is a case where a valve having an outer wall in a spherical shape or a cylindrical shape formed of a straight barrel is housed and disposed in a valve housing to be rotatably operated from outside. The rotary flow rate control valve uses a spherical or cylindrical valve and is configured so that a desired motion can be obtained with respect to a passage provided to be connected to the valve chamber within the valve housing by appropriately opening and closing the passage by the rotational motion of the valve.

The inner wall of the valve chamber within the valve housing is formed along the outer wall of the valve, and the distance between the outer wall of the valve and the inner wall of the housing is equal in the circumferential direction.

However, if a foreign matter in the coolant within the valve housing is caught between the outer wall of the valve and the inner wall of the housing or the foreign matter remains, the rotation of the valve may be hindered. Further, the load torque related to the driving of the valve may increase, and the pressure loss resistance may increase.

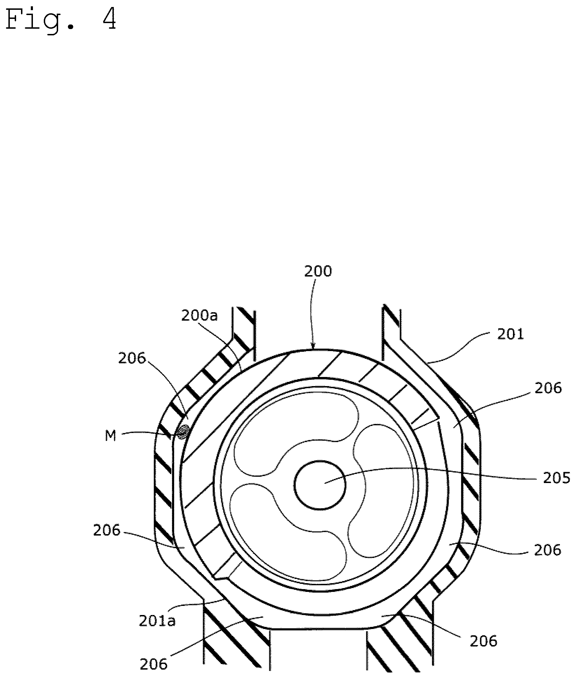

To address the problem, in the invention disclosed in PL 1, as shown in FIG. 4, a structure in which the radial section shape of an inner wall 201a of a housing 201, which rotatably houses a valve 200, has a polygonal shape is disclosed.

That is, the inner wall 201a of the housing 201 is formed so that the distance from a rotation shaft 205 varies in the circumferential direction, and thus, when a foreign matter M in the coolant enters between an outer wall 200a of the valve 200 and the inner wall 201a of the housing 201, the foreign matter M moves to a large gap 206 with the rotation of the valve 200 about the shaft. Accordingly, the possibility of a hindrance to the rotation of the valve 200 can be reduced.

### Citation List

### Patent Literature

[PTL 1] JP-A-2019-211069

### Summary of Invention

### Technical Problem

However, when the radial cross-sectional shape of the inner wall 201a of the housing 201 has a polygonal shape and the gap 206 for allowing the foreign matter M to enter is provided between the valve 200 and the inner wall, as in the structure of the invention disclosed in PTL 1, a problem of an increase in size of the electric valve arises.

The invention was achieved in view of the above-described problem and aims to provide an electric valve including a rotary valve, even when foreign matter in a coolant enters between the outer wall of the valve and the inner wall of the housing, the electric valve which can suppress hindrances to the rotation of the valve by the foreign matter and can suppress an increase in size.

### Solution to Problems

In order to solve the above-described problem, an electric valve according to the invention includes a housing with an opening at one end and a communication port on its outer circumference,
a valve that is rotatably inserted into the housing and opens and closes the communication port, a seal member attached to the communication port in slide contact with the outer circumference of the valve, and a driver for driving the valve to rotate,
wherein the valve is provided with a valve portion with a tubular shape,
an outer wall capable of blocking the communication port, a valve hole capable of communicating with the communication port, a valve opening formed at one end of the valve portion and communicating with the opening, and a foreign matter collection portion is formed, and the foreign matter collection portion, formed of a groove or a hole, is formed in a non-seal region that is not in slide contact with the seal member in the outer circumference of the valve portion.

According to the configuration, the foreign matter collection portion is formed in the non-seal region, not in slide contact with the seal member in the outer circumference of the valve portion.

Thus, even when a foreign matter in the coolant enters a gap between an inner wall of the housing and the outer wall of the valve, the foreign matter can be stored within the foreign matter collection portion with the rotation of the valve. As a result, the simultaneous contact between foreign matter and the inner wall of the housing and the outer wall of the valve, caused by the rotation of the valve, can be suppressed, and this prevents the foreign matter from hindering the rotation of the valve.

Further, since the foreign matter collection portion storing the foreign matter is formed in the outer wall of the valve, an increase in size of the electric valve can be suppressed. Furthermore, since the foreign matter collection portion is the groove or hole formed in the valve, the foreign matter can be scraped off by the edge of the foreign matter collection portion with the rotation of the valve, and thus the foreign matter collection effect increases more than that in the related art.

The foreign matter collection portion is preferably formed in the outer wall of the valve portion in an elongated shape from one end to the other end in the axial direction along the axis serving as the rotation center of the valve.

As described above, the foreign matter collection portion, formed of a groove or a hole, is formed in an elongated shape from one end to the other end in the rotation axis direction of the valve portion, and thus, the edge of the foreign matter collection portion for scraping off the foreign matter can be made longer. Therefore, the effect of scraping off the foreign matter by the edge of the foreign matter collection portion can be further increased.

It is preferable that the valve has two or more valve portions to be coupled in the axial direction along the rotation center axis of the valve, and the foreign matter collection portion formed at least one of the valve outer walls of the adjacent valve portions is in a position to overlap the valve hole formed in another valve portion in the axial direction.

According to the configuration, the foreign matter stored in the foreign matter collection portion can be caused to flow to the valve hole.

### Advantageous Effects of Invention

According to the electric valve of the invention, in an electric valve including a rotary valve, even when a foreign matter in a coolant enters between the outer wall of the valve and the housing inner wall, a hindrance to the rotation of the valve by the foreign matter can be suppressed, and an increase in size can be suppressed.

### Brief Description of Drawings

[FIG. 1]

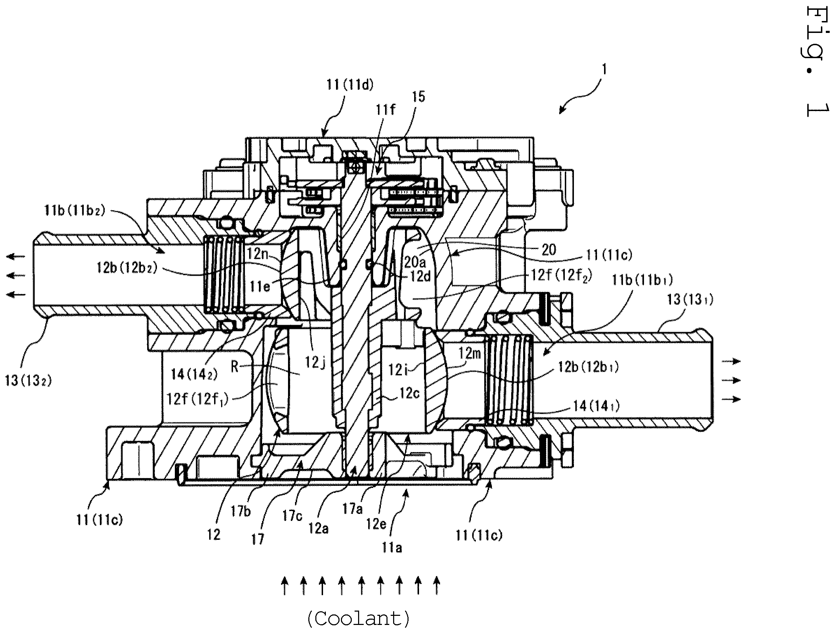

   FIG. 1 is a cross-sectional view showing a configuration example of an electric valve of an embodiment.
[FIG. 2]

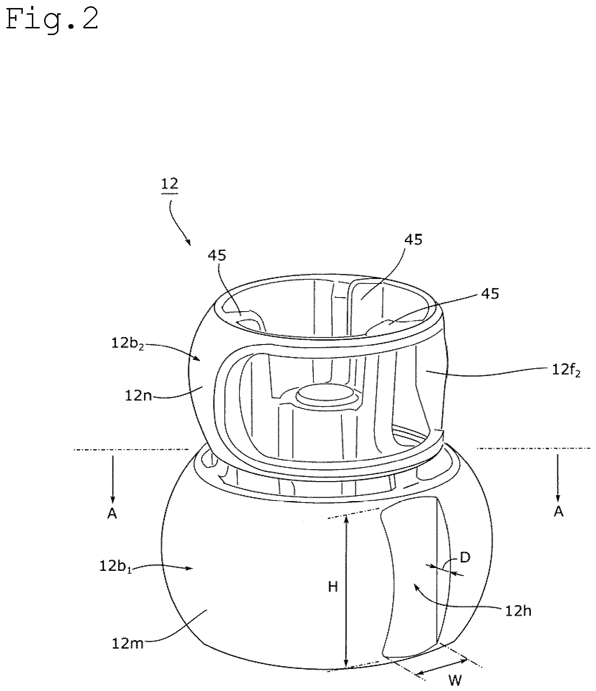

   FIG. 2 is a perspective view of a valve body of a valve provided in the electric valve in FIG. 1.
[FIG. 3]

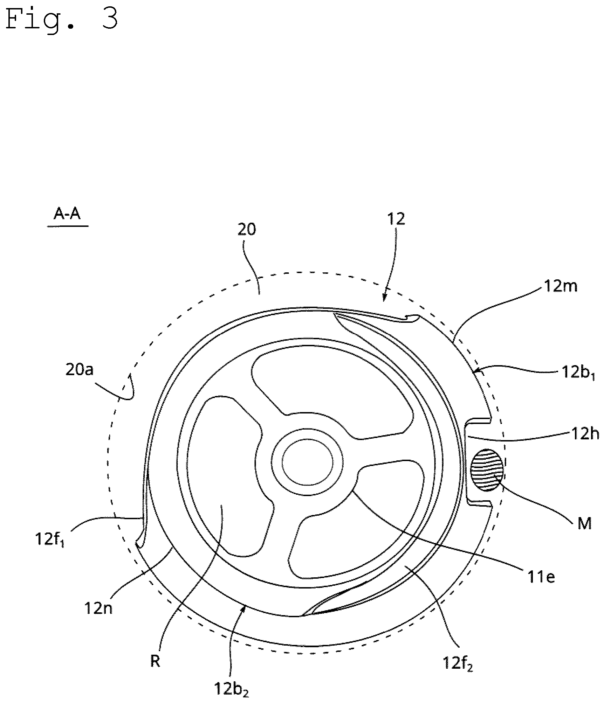

   FIG. 3 is a cross-sectional view in FIG. 2, as seen in the direction of arrows A-A.
[FIG. 4]
   FIG. 4 is a cross-sectional view showing an example of a radial cross-sectional shape of a valve housing in the related art.

### [Description of Embodiments]

Hereinafter, embodiments of an electric valve according to the invention will be explained in detail with reference to the drawings. Note that the invention is not limited to these embodiments. Furthermore, in the specification and the drawings of the application, the elements that can be described in the same manner may have the same signs, and the overlapping description thereof may be omitted.

FIG. 1 is a sectional view showing a configuration example of an electric valve of one embodiment. In the present embodiment, for convenience of description, upward and downward directions in FIG. 1 are simply referred to as "upper" and "lower".

An electric valve 1 of the present embodiment is to be used, for example, in a cooling circuit (a circulation system of a coolant) of an automobile including a cooling passage in which a coolant flowing out from an engine (cylinder head side) returns to the engine (cylinder block side) via a radiator, and a bypass passage in which the coolant flowing out from the engine returns to the engine not via (around) the radiator. In the electric valve 1, valve holes formed in the valve are controlled to open and close, thereby respectively distributing the coolant flowing in through the engine toward the cooling passage and the bypass passage and controlling the flow rates thereof.

### Basic Structure of Electric Valve

The electric valve 1 of the present embodiment includes
a housing 11 in which an inflow port 11a and a plurality of outflow ports 11b (11b₁, 11b₂) for the coolant are formed,
a valve 12 which is housed in the internal space of the housing 11 and rotatable around a shaft (rotation shaft) in the internal space, adaptors 13 (13₁, 13₂) which is connected to the outflow ports 11b, and seal members 14 (14₁, 14₂) for blocking the leakage of the coolant that passes through valve holes 12f (12f₁, 12f₂) formed in the valve 12 and is distributed toward the adaptors 13. In the electric valve 1, the rotation of the valve 12 is controlled according to an instruction from a controller (not shown) provided in a vehicle, which distributes the coolant appropriately toward the cooling passage and the bypass passage.

Hereinafter, the structure of the electric valve 1 of the present embodiment will be described more specifically. In the present embodiment, the direction along the axial line as the rotation center of the valve 12 is referred to as the "axial direction", the direction orthogonal to the axial line is referred to as the "radial direction", and the direction around the axial line is referred to as the "circumferential direction".

The housing 11 includes a body 11c having an internal space (a valve housing portion 20) for housing the valve 12, and a lid 11d having a bottomed shape forming a space for housing a reduction gear 15 between an upper surface of the body 11c and itself. The opening end portion (peripheral edge) of the lid 11d is attached to the upper surface of the body 11c to close the internal space of the lid 11d. Furthermore, the reduction gear 15 housed in the space of the lid 11d includes a plurality of gears and has a function of reducing and transmitting the rotation of a motor (driver: not shown) that operates in response to a command from the controller to the valve 12.

In the housing 11, a cylindrical insertion cylinder 11e rotatably supporting a shaft 12a that functions as the rotation shaft of the valve 12 in an inserted state is provided in an upper part of the body 11c. A journal 11f rotatably supporting the upper portion of the shaft 12a is provided on the inner circumference of the insertion cylinder 11e.

In the housing 11, the outflow ports 11b (11b₁, 11b₂) as communication ports having substantially cylindrical shapes are projected outward in the radial direction in the outer circumference of the body 11c (an inner wall 20a of the valve housing portion 20). The outflow ports 11b₁, 11b₂ shown in FIG. 1 are respectively provided at different positions in the axial direction and the circumferential direction. Furthermore, the adaptors 13 (13₁, 13₂), having cylindrical shapes communicating with the above-described cooling passage and bypass passage, are respectively inserted into and fixed in the outflow ports 11b.

In FIG. 1 (cross-sectional view), the outflow ports 11b are provided in two parts of the body 11c; however, not limited to these positions. The outflow ports 11b may be further formed at other positions than those in FIG. 1 according to the number and directions of the flow passages for distributing the coolant.

Furthermore, the inflow port 11a, as an opening communicating with the cylinder head side for taking the coolant into the valve 12 side, is formed on the lower end of the housing 11. Furthermore, a frame 17, supporting the lower end of the shaft 12a by a cylindrical portion 17a formed in the center part, is attached to the inflow port 11a. Specifically, the frame 17 has an annular framework portion 17b attached to the housing 11 along the peripheral edge of the inflow port 11a, the cylindrical portion 17a formed in the center part of the framework portion 17b, and a plurality of bridges 17c for frame reinforcement respectively connecting a plurality of parts (at equal intervals) of the framework portion 17b and the cylindrical portion 17a. Coolant can pass through the frame 17 and flow into the housing 11.

### Valve

The valve 12 has a shaft 12a that functions as the rotation shaft and a valve body 12b having an outer wall capable of changing the communication state with the outside and being integrally rotatably connected to the shaft 12a. The gears as component members of the reduction gear 15 are integrally attached to the shaft 12a. Thus, when the gears rotate due to the driving of the motor, the valve 12 (the shaft 12a, the valve body 12b) integrally rotates with the rotation.

Furthermore, in the valve 12, the valve body 12b is provided with a connecting part 12c that connects the outer circumferential portion of the shaft 12a while the shaft 12a is penetrating through at the center part.

The valve body 12b has a structure in which two tubular valve portions, each having upper and lower openings and a spherical outer wall, are vertically connected. The valve openings communicate with the inflow port 11a (opening) of the housing 11. In the present embodiment, one valve portion formed in the lower part is a first valve portion 12b₁, and the other valve portion formed thereon is a second valve portion 12b₂.

More specifically, the valve body 12b is formed of a resin substantially in a tubular shape and housed in the valve housing portion 20. The shaft 12a is located on the center axis of the valve 12. As shown in FIG. 2, the valve body 12b of the valve 12 has the first valve portion 12b₁ that opens at upper and lower ends and the second valve portion 12b₂ that similarly opens at upper and lower ends and is formed to communicate in the axial direction from one end (the upper end in the drawing) of the first valve portion 12b₁. As shown in FIG. 1, the valve body 12b has a communication path R for the coolant inside thereof formed by the first valve portion 12b₁ and the second valve portion 12b₂, and communicating with the inflow port 11a (opening).

Outer walls 12m, 12n (valve outer walls) of the first valve portion 12b₁ and the second valve portion 12b₂ are formed in spherical shapes having the largest diameters at the centers in the axial direction (so-called a ball valve) as shown in the drawing, and valve portion inner walls 12i, 12j forming the communication path R through which the coolant passes are formed in parallel to the axial direction.

Further, the inner wall 20a of the valve housing portion 20 is formed to follow the shapes of the outer walls 12m, 12n of the first valve portion 12b₁ and the second valve portion 12b₂, and the gap distances between the inner wall 20a and the outer walls 12m, 12n are substantially the same in the circumferential direction.

Within the second valve portion 12b₂, for example, three reinforcing members 45 are evenly disposed in the circumferential direction and reinforce the valve 12. These reinforcing members 45 are configured not to interfere with the insertion cylinder 11e. The shaft 12a is guided by the insertion cylinder 11e and rotates integrally with the valve body 12b.

The part between the shaft 12a and the insertion cylinder 11e of the housing 11 is closed by a seal ring 12d. Accordingly, the coolant within the body 11c does not flow from the insertion cylinder 11e into the lid 11d. Furthermore, the lower end opening of the first valve portion 12b₁ functions as an introduction port 12e that takes the coolant flowing in from the cylinder head side via the frame 17 (inflow port 11a) into the internal space of the valve 12.

In the first valve portion 12b₁ and the second valve portion 12b₂, a valve hole 12f₁ and a valve hole 12f₂ are provided, respectively. The valve holes 12f penetrate the thicknesses of the first valve portion 12b₁ and the second valve portion 12b₂ in the radial direction. When the valve 12 rotates and the valve hole 12f overlaps with the opening of the seal member 14, the coolant flows out from the overlapping portion. In this manner, when the valve body 12b rotates with the rotation of the shaft 12a, the respective valve holes 12f open and close and change the communication states between the inflow port 11a and the outflow ports 11b (11b₁, 11b₂) by the opening and closing actions. That is, the respective valve holes 12f provided in the valve 12 are formed to change the communication states between the respective corresponding outflow ports 11b (11b₁, 11b₂) and the internal space of the valve 12 with the rotation. Accordingly, the coolant taken into the internal space of the valve 12 (first valve portion 12b₁, second valve portion 12b₂) via the introduction port 12e is distributed toward the cooling passage and the bypass passage according to the opening and closing actions of the respective valve holes 12f, and the flow rates thereof are controlled.

As shown in FIGS. 2 and 3, the valve 12 according to the present embodiment has a groove portion 12h as a foreign matter collection portion, which groove portion 12h is formed with a predetermined width W in the circumferential direction and extends in an elongated manner in the axial direction. The groove portion 12h is located in a region where the valve hole 12f₁ of the outer wall 12m of the first valve portion 12b₁ is not formed and is located outside the regions to be used for sealing of the outflow ports 11b. These regions are not in slide contact with the seal members 14 and are referred to as the non-seal region. In the present embodiment, the groove portion 12h is formed at a position overlapping with the valve hole 12f₂ formed in the second valve portion 12b₂ in the rotation axis direction in the outer wall 12m of the first valve portion 12b₁.

The length dimension H in the axial direction of the groove portion 12h is formed from one end (upper end) to the other end (lower end) of the first valve portion 12b₁ along the axial direction. Further, the deepest part of the groove portion 12h is formed to have a predetermined dimension D.

As described above, the inner wall 20a of the valve housing portion 20 is formed to follow the shapes of the outer walls 12m, 12n of the first valve portion 12b₁ and the second valve portion 12b₂, and the gap distances between the inner wall 20a and the outer walls 12m, 12n are formed substantially the same in the circumferential direction. Accordingly, if the foreign matter M in the coolant enters the gap between the inner wall 20a and the outer wall 12m, it may be impossible to eject the foreign matter M. As shown in FIG. 3, the groove portion 12h is provided, and thus the foreign matter M can be held within the groove 12h with the rotation of the valve 12.

Furthermore, the groove portion 12h may be formed at a position to overlap the valve hole 12f₂ formed in the second valve portion 12b₂ in the axial direction. In this case, the foreign matter M held within the groove portion 12h can be caused to flow into the valve hole 12f₂.

Note that, if the foreign matter M remains held within the groove portion 12h, contact between the foreign matter M and the inner wall 20a of the valve housing portion 20 and the outer wall 12m of the first valve portion 12b₁ at the same time can be suppressed, with the rotation of the valve 12, and the foreign matter M can be prevented from hindering the rotation of the valve 12.

Although not illustrated, a groove portion similar to the groove portion 12h may be formed in a region where the valve hole 12f₂ of the outer wall 12n of the second valve portion 12b₂ is not formed and is located outside the regions to be used for sealing of the outflow ports 11b. In this case, the groove portion 12h may be formed in a position to overlap the valve hole 12f₁ formed in the first valve portion 12b₁ in the axial direction in the outer wall 12n of the second valve portion 12b₂.

According to the above-described configuration, the groove portion is provided in the second valve portion 12b₂, and thus, even when the foreign matter M in the coolant enters the gap between the inner wall 20a and the outer wall 12n at the second valve portion 12b₂ side, the foreign matter M can be held within the groove portion with the rotation of the valve 12.

Furthermore, in the case where the groove portion is provided in the second valve portion 12b₂, when the groove portion is formed in a position to overlap the valve hole 12f₁ formed in the first valve portion 12b₁ in the axial direction, the foreign matter M can be caused to flow into the valve hole 12f₁.

Furthermore, if the foreign matter M remains held within the groove portion, contact betweenforeign matter M andthe inner wall 20a of the valve housing portion 20 and the outer wall 12n of the second valve portion 12b₂ at the same time with the rotation of the valve 12 can be suppressed, and the foreign matter M can be prevented from hindering the rotation of the valve 12.

As described above, according to the present embodiment, the groove portion 12h as the foreign matter collection portion is formed from one end to the other end in the axial direction in the outer circumference of the first valve portion 12b₁ (second valve portion 12b₂) in the non-seal regions not in slide contact with the seal members 14.

Accordingly, even when the foreign matter M in the coolant enters the gap between the inner wall 20a of the valve housing portion 20 and the outer wall 12m (12n) of the valve body 12, the foreign matter can be held within the groove 12h with the rotation of the valve 12. As a result, the contact between foreign matter M and the inner wall 20a of the valve housing portion 20 and the outer wall 12m (outer wall 12n) of the first valve portion 12b₁ (second valve portion 12b₂) at the same time with the rotation of the valve 12 can be suppressed, and the foreign matter M can be prevented from hindering the rotation of the valve 12.

Since the groove portion 12h holding the foreign matter is formed in the outer wall of the valve 12, an increase in size of the electric valve can be suppressed.

Furthermore, the groove portion 12h is formed in an elongated shape extending from one end to the other end of the first valve portion 12b₁ (second valve portion 12b₂) in the axial direction, and thus, the foreign matter can be scraped off by the edge of the elongated groove portion 12h accompanied by the rotation of the valve body 12, and the foreign matter collection effect is increased.

More preferably, the groove portion 12h is formed at a position to overlap the valve hole 12f₂ (valve hole 12f₁) of the second valve portion 12b₂ (first valve portion 12b₁) in the axial direction, and thus the foreign matter M held within the groove portion 12h can be caused to flow to the valve hole 12f₂ (valve hole 12f₁).

As described above, according to one embodiment of the invention, the rotation of the valve 12 is not hindered by foreign matter M, thereby improving the controllability and durability.

In the present embodiment, the bottom part of the groove portion 12h is formed to be flat; however, the invention is not limited to that. The bottom part may have a curved shape along the surface shape of the outer wall 12m. In this case, the depth of the groove portion 12h can be made even.

Furthermore, in the present embodiment, the groove portion 12h has a U-shaped cross-section as shown in FIG. 3. However, the cross-sectional shape of the groove portion 12h is not limited to this in the invention.

Furthermore, in the present embodiment, the foreign matter collection portion is described as the groove portion 12h. However, the invention is not limited to this. The foreign matter collection portion may be formed as a hole (a hole with a bottom or a through-hole) in the outer wall 12m.

In the present embodiment, the valve 12 in which the first valve portion 12b₁ and the second valve portion 12b₂ are coupled in the axial direction is described as an example. However, the valve according to the invention is not limited to that form. For example, the number of valve portions may be one, or three or more valve portions may be coupled in the direction of the rotation axis.

When three or more valve portions are coupled in the direction of the rotation axis, the groove portion 12h formed in the valve outer wall of at least one of the adjacent valve portions may be at a position to overlap the valve hole formed in the other valve portion in the direction of the rotation axis.

In the present embodiment, the valve having the outer wall in a spherical shape (the so-called ball valve) is described. However, the invention is not limited to that form. A valve having an outer wall surface in a straight barrel shape may be adopted.

In the present embodiment, as an example, the electric valve 1 that distributes the coolant flowing in from the inflow port 11a (via the frame 17 side) toward the cooling passage and the bypass passage is described. However, the connection configuration of the flow passages communicating with the electric valve 1 is not limited to that. The connection configuration can be appropriately changed according to the specifications of the cooling circuit (the circulation system of the coolant) of the automobile: for example, for the flow path in which the coolant flows from the inflow port (upstream) formed in the outer circumference of the body 11c of the housing 11 (inner wall 20a of the valve housing portion 20) to the outflow port (downstream) at the frame 17 side or the like.

Furthermore, in the present embodiment, the seal members 14 (14₁, 14₂) are pressed against the outer wall of the valve 12 by urging forces of the coil springs, as shown in FIG. 1, but not limited to those. As long as the seal members can block the leakage of the coolant passing through the valve holes 12f of the valve 12 and distributed toward the adaptors 13, the seal members may be implemented by other structures.

The preferred embodiments of the invention are described in detail above. Alterations, modifications, and changes can be made without departing from the scope of the claims.

### Reference Signs List

- 1: electric valve
- 11: housing
- 11b: outflow port (communication port)
- 12: valve
- 12a: shaft
- 12b₁: first valve portion (valve body)
- 12b₂: second valve portion (valve body)
- 12f₁: valve hole
- 12f₂: valve hole
- 12m: outer wall (valve outer wall)
- 12h: groove portion (foreign matter collection portion)
- 14: seal member
- 20: valve housing portion
- 20a: inner wall
- R: communication path

## Claims

1. An electric valve comprising:
a housing with an opening at one end and a communication port on its outer circumference;
a valve that is rotatably inserted into the housing and opens and closes the communication port;
a seal member attached to the communication port in slide contact with the outer circumference of the valve; and
a driver for driving the valve to rotate,
wherein
the valve has a valve portion with a tubular shape, and
the valve portion is provided with an outer wall capable of blocking the communication port, a valve hole capable of communicating with the communication port, a valve opening formed at one end of the valve portion and communicating with the opening, and a foreign matter collection portion is formed, and the foreign matter collection portion, formed of a groove or a hole, is formed in a non-seal region that is not in slide contact with the seal member in the outer circumference of the valve portion.

2. The electric valve according to claim 1,
wherein
the foreign matter collection portion is formed in the outer wall of the valve portion in an elongated shape from one end to the other end in an axial direction along an axis serving as the rotation center of the valve.

3. The electric valve according to claim 1,
wherein
the valve has two or more valve portions to be coupled in the axial direction along the rotation center axis of the valve, and the foreign matter collection portion, formed at least one of the valve outer walls of the adjacent valve portions, is in a position to overlap the valve hole formed in another valve portion in the axial direction.
